# EUROPEAN PATENT APPLICATION

(11) **EP 2 502 957 A1**
(43) Date of publication of application: **26.09.2012**
(21) Application number: 10831547.4
(22) Date of filing: 16.11.2010
(51) Int. Cl.: C08J 7/00, B23K 26/38, F16J 15/32

(54) **METHOD FOR PROCESSING RUBBER SURFACE AND SEALING MEMBER**

(30) Priority: 20.11.2009 JP 2009265278
(71) Applicant: Uchiyama Manufacturing Corp., Okayama-shi Okayama 702-8004 (JP)
(72) Inventor: YAMAMOTO, Tomohisa, Akaiwa-shi Okayama 701-2221 (JP); KATAYAMA, Tatsuo, Akaiwa-shi Okayama 7012221 (JP); YOKOTA, Ritsuko, Akaiwa-shi Okayama 7012221 (JP); ASANUMA, Chihiro, Akaiwa-shi Okayama 7012221 (JP); MITOOKA, Yutaka, Okayama-shi Okayama 7011296 (JP); HINO, Makoto, Okayama-shi Okayama 7011296 (JP)
(74) Representative: Müller - Hoffmann & Partner
(86) International application number: PCT/JP2010/070352
(87) International publication number: WO 2011/062153

(57) **Abstract**

A method for processing a rubber surface and a sealing member treated with the method. In the first mode, a rubber surface is formed with a large number of small dimples in a regularly dotted pattern by irradiating laser beams from a laser irradiation device. In the second mode, a skin layer of the rubber surface is removed by irradiating laser beams from the laser irradiation device. In the third mode, the first mode and the third mode are combined. A sealing member comprises rubber including a seal lip part for elastically and slidably contacting a counterpart member, wherein a sliding contact surface of the seal lip part contacting the counterpart member is treated with one of the first, the second and the third modes of the method for processing a rubber surface.

## Description

### Technical Field

The present invention relates to a method for processing a rubber surface and to a sealing member treated with the method for processing a rubber surface, for example, a method for processing a seal lip part of a rubber sealing member which is incorporated into a seal ring of a bearing and a rubber sealing member which is executed with the processing method.

### Background Art

The seal ring of the bearing as mentioned above includes a rubber sealing member integrally fixed to a core member and is interposed between two members (for example, an outer ring and an inner ring) which rotate relatively. The sealing member is fitted to one of the two members via the core member; the seal lip part is incorporated so as to elastically contact the other of the two members directly or via a slinger and elastically and slidably contacts a counterpart member (the other member mentioned above, a slinger or the like), thereby sealing a bearing space of the bearing.

The seal ring incorporating the sealing member is designed such that a lubricant agent such as grease is applied on a sliding contact part of the seal lip part relative to the counterpart member as mentioned above in order to reduce sliding contact resistance with the counterpart member while keeping seal performance. A minute concavo-convex process (roughening process) is executed on the sliding contact part of the seal lip in order to improve retention performance of the lubricant agent and to reduce abrasion and friction. Patent Literatures 1 to 3 disclose a sealing member on which such a roughening process is executed. Patent Literature 4 discloses a surface processing method of a vulcanized rubber for forming on the surface a minute concavo-convex structure by irradiating ultraviolet laser beams.

### Citation List

### Patent Literature

PTL 1 : Japanese unexamined Patent Publication JP-2001-355740-A
PTL 2 : Japanese unexamined Patent Publication JP-2004-263738-A
PTL 3 : Japanese unexamined Patent Publication JP-2008-8455-A
PTL 4 : Japanese Patent JP-3380124-B

### Summary of the Invention

### Technical Problem

Conventional surface roughening methods on a rubber surface include a method in which surface texturing is executed on a molding surface of a mold for producing a rubber substrate and a surface executed with the surface texturing is transferred on the rubber substrate in case of molding and a method in which the surface of a molded rubber substrate is executed with a blast shot process or a grinding process. Patent Literature 1 discloses that surface roughening on a sliding surface of a seal lip made of an elastic rubber body of an oil seal is achieved by a satin finish, a screw projection or a parallel projection, or a knurling process. However, Patent Literature 1 does not disclose a specific method for the surface roughening process. Although Patent Literature 2 discloses that a roughed surface is formed on a contact surface of a seal lip made of an elastic rubber body of a seal ring with a counterpart member, a specific roughening method is not disclosed. Patent Literature 3 discloses that minute concavity and convexity are formed on a molding surface of a mold by irradiation of short pulse laser beams and a contact surface of a sealing member (a counterpart member) with an inner ring is formed with the minute concavity and convexity by transferring the concavity and convexity formed on the mold to the sealing member when resin is charged in the mold for molding the sealing member.

When the method disclosed in Patent Literature 3 is applied to a surface process of a rubber substrate, release ability at the time of molding deteriorates and yield ratio of a rubber substrate as a molded product reduces, thereby making stable mass-production difficult. In this case, the inner surface of the mold is formed with minute concavity and convexity by a cutting process, an etching process or a shot process in place of laser irradiation. However, the concavo-convex pattern cannot be desirably controlled and it is difficult to obtain a flat part which becomes a seal point, so that seal performance reliability is lost when such a method is used for a sealing member. Furthermore, it is impossible to regularly form a large number of small dimples with small diameter and enough depth at intervals.

In a method wherein a rubber substrate surface is executed with a blast shot process or a grinding process, it is difficult to obtain a flat part which becomes a seal point as mentioned above. When such a method is used for a sealing member, it becomes a factor that deteriorates seal performance; dust is generated in the above-mentioned process and remains as foreign material at a sliding contact part, thereby sometimes being a factor that hinders seal performance.

Patent Literature 4 discloses a surface processing method of a vulcanized rubber in which ultraviolet laser beams are irradiated on the surface of the vulcanized rubber and a minute concavo-convex structure is formed on the rubber surface and the concavo-convex pattern can be controlled by changing fluence of laser irradiation and the number of irradiations per unit time. A purpose of providing the minute concavo-convex structure is to prevent adhesion of vulcanized rubber products each other and to improve tribological characteristics of the rubber products such as friction coefficient control, and is not to improve retention performance or wettability of a lubricant agent at a sliding contact part with a counterpart member via the lubricant agent. When such a structure is used for a sealing member which seals sliding contact parts, abrasion powder may be generated in case of sliding contact, or the convex part may hinder the seal performance.

The present invention is proposed in view of the above-mentioned problems and has an object to provide an effective method for processing a rubber surface in which friction and abrasion of the surface of a rubber substrate used as a sealing member with a counterpart member are reduced by enhancing retention performance of a lubricant agent interposed between the rubber substrate and the counterpart member and wettability of lubricant agent is improved. The present invention also has an object to provide a sealing member obtained by the method.

### Solution to Problem

In order to solve the above-mentioned problems, there provided are the first aspect of the present invention, namely three modes for processing a rubber surface and the second aspect of the present invention, namely a sealing member applied with any one of the modes. The first mode of the method for processing a rubber surface of the first aspect of the present invention is characterized in that a rubber surface is formed with a large number of small dimples in a regularly dotted pattern by irradiating laser beams from a laser irradiation device. The second mode of the method for processing a rubber surface is characterized in that a skin layer part of rubber is removed (peeled) by irradiating laser beams from a laser irradiation device. The third mode of the method for processing a rubber surface is characterized in that a rubber surface is formed with a large number of small dimples in a regularly dotted pattern by irradiating laser beams from a laser irradiation device and further the skin layer part of rubber is removed by irradiating laser beams from the laser irradiation device.

In the above-mentioned method for processing a rubber surface, in case that a large number of small dimples are formed on the rubber srface, laser beams can be intermittently irradiated from the laser irradiation device while the laser irradiation device is scanning along the rubber surface at a fixed speed. In this case, the laser irradiation device can have a shutter, and the intermittent irradiation of laser beams is executed with opening and closing of the shutter. In case that the skin layer of rubber is peeled and removed, laser beams can be continuously irradiated from the laser irradiation device on the rubber surface while the laser irradiation device is scanning along the rubber surface at a fixed speed. In case of scanning of the laser irradiation device, laser beams are irradiated on a fixed rubber surface while the laser irradiation device moves, or laser beams are irradiated while the laser irradiation device is fixed and the rubber substrate moves.

The second aspect of the present invention relates to a sealing member comprising rubber including a seal lip part elastically and slidably contacting a counterpart member, wherein a sliding contact surface of the seal lip part relative to the counterpart member is provided with any one of the above-mentioned modes of the methods for processing a rubber surface. In this case, the sliding contact surface can have in vicinity of a distal end of the seal lip part an area where said method for processing rubber surface is not executed (non-processed area).

### Advantageous Effects of Invention

In the first mode of the method for processing a rubber surface of the first aspect of the present invention, the surface of the rubber substrate can be formed with a large number of small refined dimples in a regularly dotted pattern by irradiating laser beams from a laser irradiation device. Accordingly, when the present method is applied to the sliding contact surface for the counterpart member of the seal lip part of the sealing member made of rubber like the second aspect of the present invention, the contact area of the seal lip for the counterpart member can be reduced, thereby providing a sealing member low friction function. When the lubricant agent such as grease is provided between the sealing member and the counterpart member at use, the lubricant agent is retained or carried in a large number of small dimples; therefore the lubricant agent is gradually supplied during long mutual sliding contact without depletion of lubricant, thereby providing the sealing member low friction and low abrasion. As a result, durability of the sealing member can be enhanced. Furthermore, abrasion powder of rubber generated in case of sliding and foreign materials entering from the outside can be trapped in the small dimples, thereby suppressing damage and abrasion on the sliding surface.

When a large number of small dimples are formed on the surface of the rubber substrate, the above-mentioned pulse laser beams are intermittently irradiated while the laser irradiating device scans at a fixed speed along the rubber surface, whereby a large number of small dimples can be easily formed in a regularly dotted pattern. In the present invention, laser irradiation conditions (frequency number, time and the like), scanning speed of laser irradiation, and irradiation interval and the like of intermittent irradiation are taken into consideration for retention performance of the lubricant agent, friction or abrasion, as a result opening diameter and depth of the small dimple and distance between the small dimples can be optimized depending on the applied conditions. A laser irradiation device with a Q-switch mode is desirably applied. It is because laser beams which can oscillate short pulses are desirable for processing rubber in order to reduce thermal damage or to improve processing accuracy. When Q-switch oscillation having strong energy at short pulse oscillation and a shutter are combined, the small dimple can be deep and have small opening diameter. In addition, variation of small dimples' pitch (distance between the small dimples) can be inhibited when small dimples are formed before laser scanning speed becomes constant. In case of using only the Q-switch mode, the small dimples' pitch becomes constant by steady laser irradiation; however, the small dimples' pitch between the small dimples can be desirably changed using the shutter and the Q-switch mode together.

In the second mode of the method for processing a rubber surface of the first aspect of the present invention, the surface layer part of rubber can be easily peeled or removed by irradiating laser beams from the laser irradiation device. When the method is applied to the sliding contact surface for the counterpart member of the seal lip part of the sealing member made of rubber like the second aspect of the present invention, a so-called skin layer which is formed on the rubber surface at molding can be removed, so that the rubber surface is reformed to have water repellency and lipophilic property. As a result, damage caused by dirty water under usage environment can be prevented and wettability of an oil-based lubricant agent such as grease is improved, so that the lubricant agent interposed between the counterpart member and the sliding contact surface uniformly spreads on the sliding contact surface, sliding contact resistance with the counterpart member is reduced, and friction or abrasion is reduced.
When laser beams are continuously irradiated during the laser irradiation device's scanning at a fixed speed along the rubber surface, the surface layer part of rubber can be easily removed. In this case, wettability (water repellency and lipophilic property) of the lubricant agent can be desirably optimized depending on applied conditions by appropriately setting laser irradiation conditions (frequency number, time and the like) and scanning speed of laser irradiation. In this case, when laser beams are irradiated by pulse oscillation, thermal damage of rubber can be reduced as compared with continuous (CW) oscillation.

In the third mode of the method for processing a rubber surface of the first aspect of the present invention, the above-mentioned first mode and the above-mentioned second mode are used together. When processing treatments by suchmodes are applied to the sliding contact surface of the seal lip part of the sealing member made of rubber contacting the counterpart member like the second aspect of the present invention, the above-mentioned effects are combined, thereby forming a sealing member which is superior in seal performance and retention performance of lubricant agent and has low friction, low abrasion and long durability.

When the sliding contact surface has in the vicinity of a distal end of the seal lip part an area where the above-mentioned processing treatment is not executed, namely a non-processed area, in the second aspect of the present invention, the flat part which becomes the seal point can be secured, so that reduction of seal performance by the processing treatment can be compensated by existence of the non-processed area. Furthermore, the processing treatment is executed by the above-mentioned laser irradiation device, and the non-processed area can be easily and accurately formed by appropriately setting conditions of the laser irradiation device.

### Brief Description of Drawings

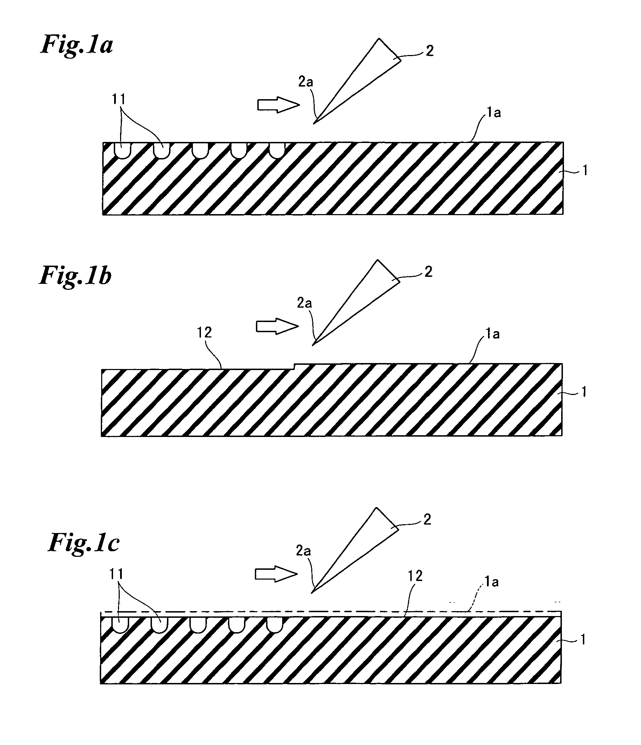

Fig.1a, Fig.1b and Fig.1c show a basic concept explaining a method for processing a rubber surface of the present invention. Fig.1a shows an embodiment of the first mode of the method for processing a rubber surface, Fig.1b shows an embodiment of the second mode of the method, and Fig.1c shows an embodiment of the third mode of the method.

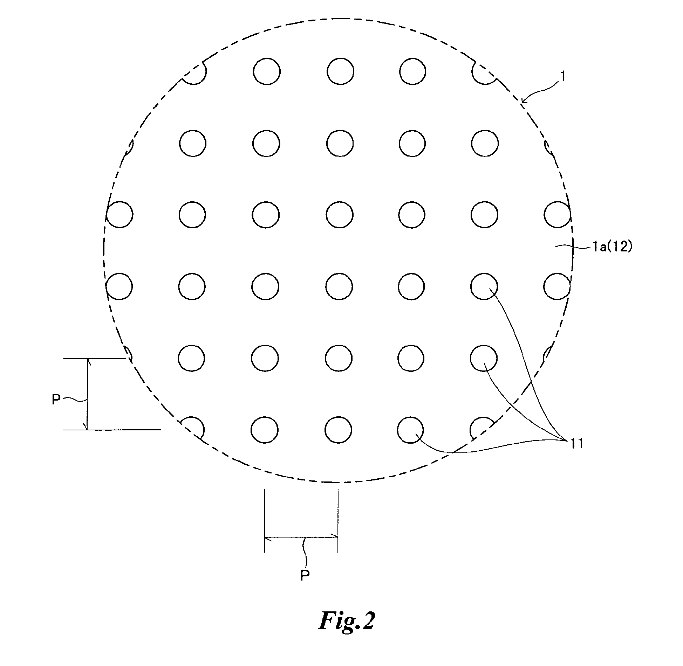

Fig.2 is an external plane view conceptually showing a rubber surface observed with a microscope when the surface is processed with the first mode or the third mode of the processing method.

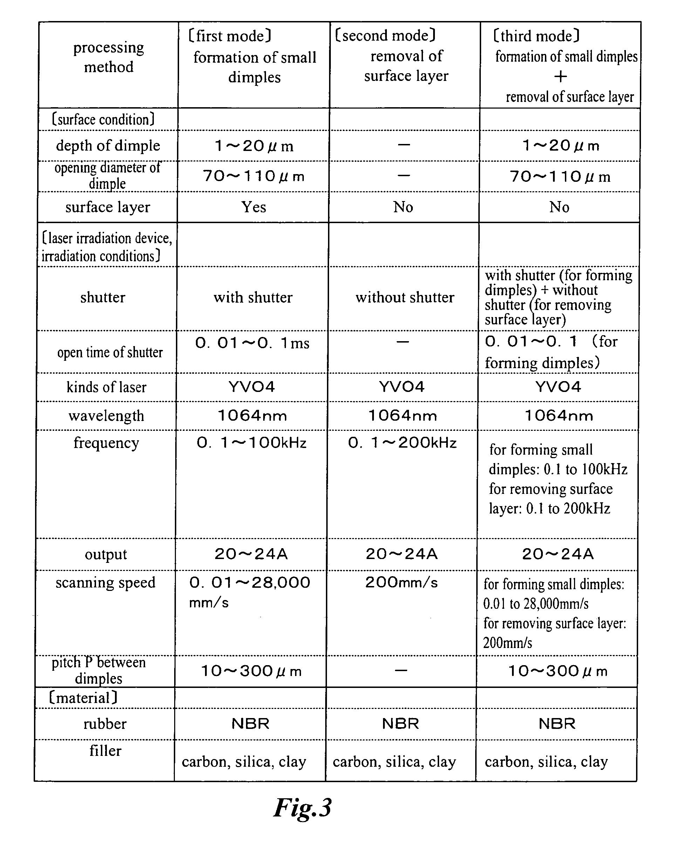

Fig.3 shows in table process conditions and the like of the processing methods of the first to the third modes.

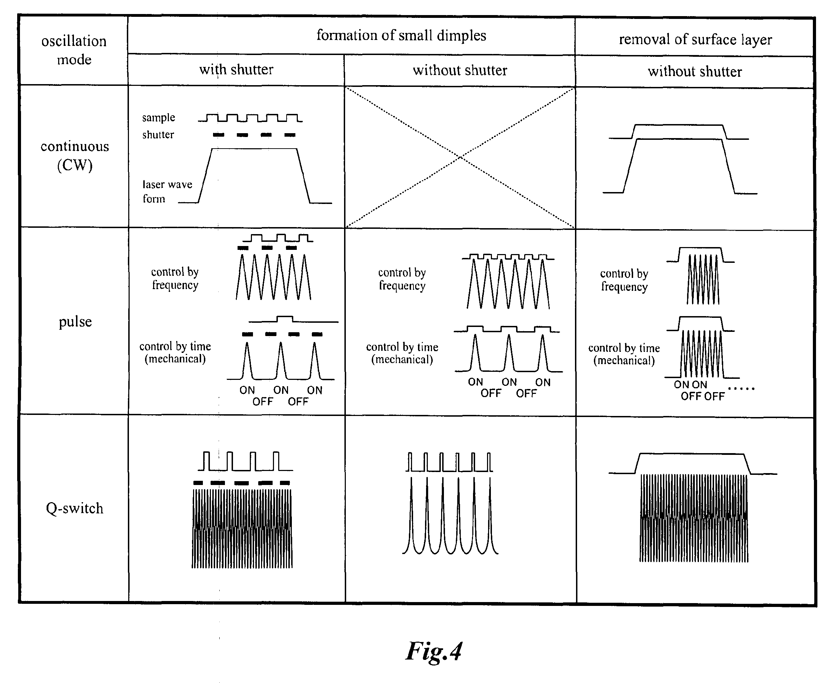

Fig.4 is an explanatory table showing relation of a laser oscillation mode and a processing mode of a laser irradiation device for use in the processing method of the present invention.

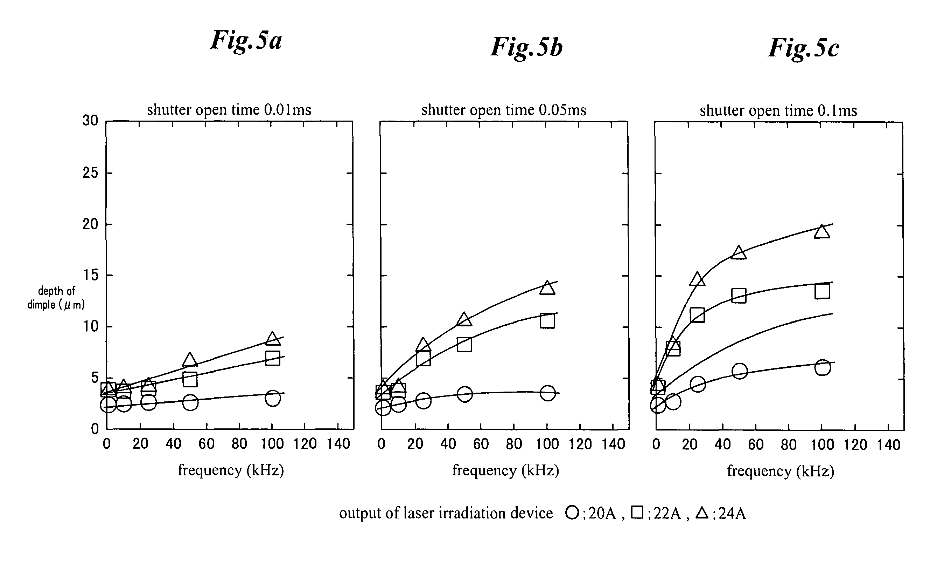

Fig.5a, Fig.5b and Fig.5c show relation of laser irradiation conditions of a laser irradiation device and depth of a formed small dimple. Fig.5a shows a case when open time of an open-close shutter for laser irradiation is 0.01ms, Fig.5b shows a case when it is 0.05ms, and Fig.5c shows a case when it is 0.1ms.

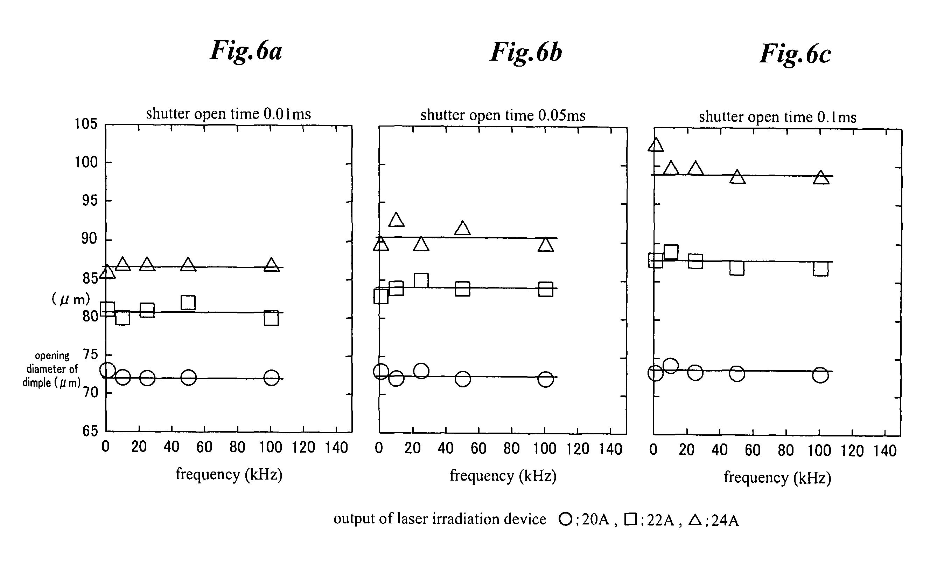

Fig.6a, Fig.6b and Fig.6c show relation of laser irradiation conditions of a laser irradiation device and opening diameter of a formed small dimple. Fig.6a shows a case when open time of the open-close shutter for laser irradiation is 0.01ms, Fig.6b shows a case when it is 0.05ms, and Fig.6c shows a case when it is 0.1ms.

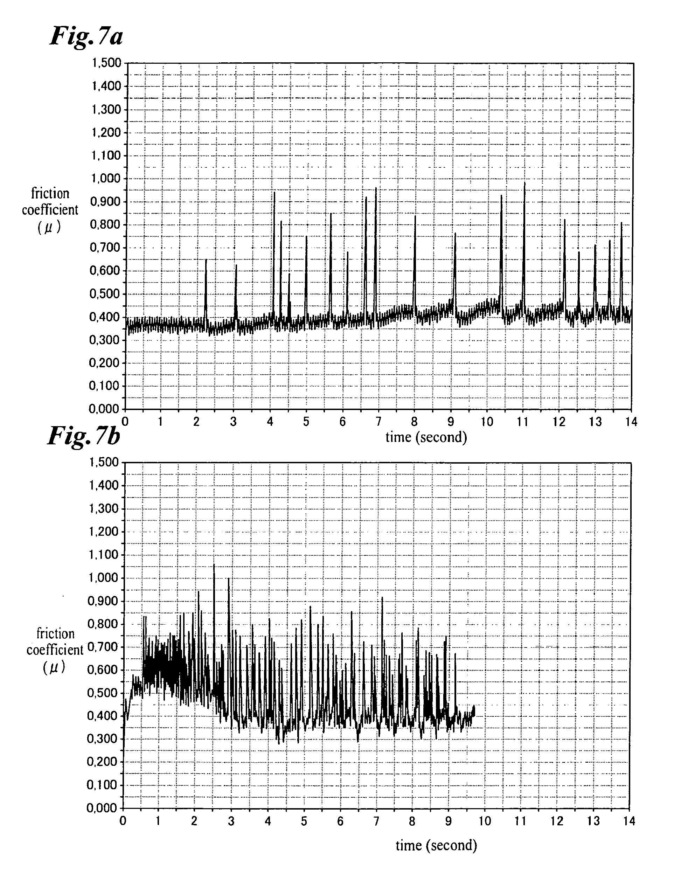

Fig.7a is a graph showing time change in friction coefficient when a sample of the rubber substrate processed by a method of the first mode and a metal member slidably contact each other with grease interposed therebetween, and Fig.7b is a graph showing time change in friction coefficient of a sample of a non-processed rubber substrate.

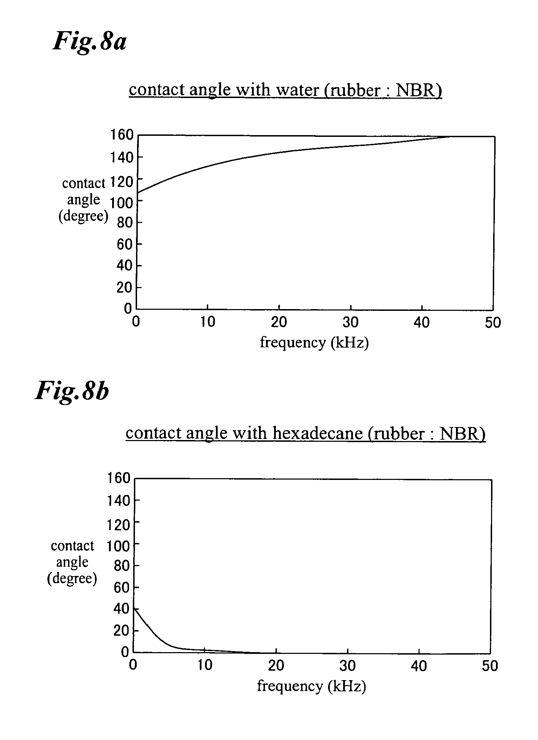

Fig.8a and Fig.8b are graphs showing relation of hydrophilic property and lipophilic property of the surface of a sample of a rubber substrate processed by a method of the second mode and pulse frequency of irradiated laser beams. Fig.8a shows relation of contact angle of a water drop relative to a rubber surface when water drops and pulse frequency of irradiated laser beams, and Fig.8b shows relation of contact angle of a hexadecane drop relative to a rubber surface when hexadecane drops and pulse frequency of irradiated laser beams.

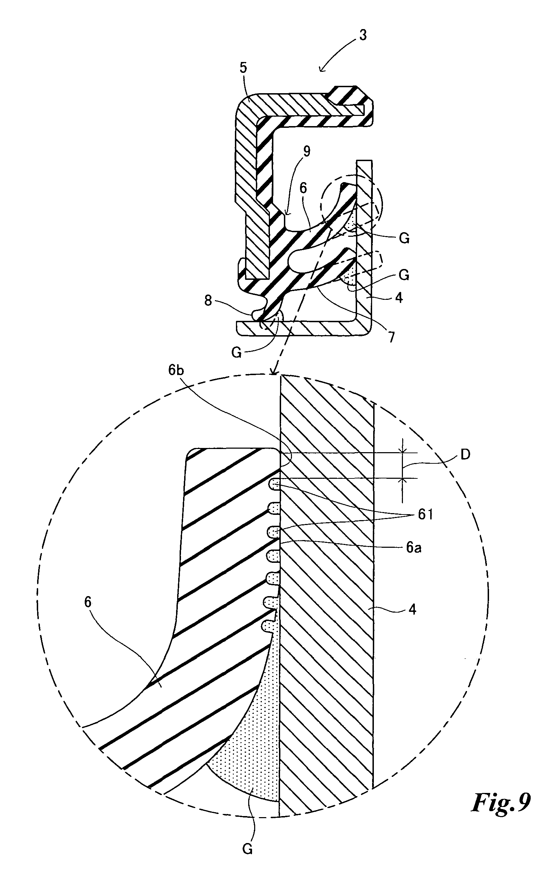

Fig.9 is a sectional view including a partially enlarged view of one embodiment of a pack-seal type seal ring when a rubber substrate treated by a processing method of the present invention is applied to a seal lip.

### Description of Embodiments

The embodiments of the present invention are explained as below referring to the attached drawings. Fig.1a conceptually shows the first mode of a method for processing a rubber surface of the present invention, wherein a large number of small dimples 11··· are formed in a regularly dotted pattern by intermittently irradiating laser beams at appropriate intervals under fixed irradiation conditions while a laser irradiation device 2 scans along a surface 1a of a rubber substrate 1 at a fixed speed in the direction of an outlined arrow.

Fig.1b conceptually shows the second mode of the processing method of the present invention. Fig.1b shows that a removed (peeled) part 12 is formed on the surface 1a of the rubber substrate 1 by continuously irradiating laser beams under fixed irradiation conditions while the laser irradiation device 2 scans along the surface 1a of the rubber substrate 1 at a fixed speed in the direction of an outlined arrow. Fig.1c conceptually shows the third mode of the processing method of the present invention, wherein the above-mentioned first mode and second mode are used together and a large number of small dimples 11··· are formed in a regularly dotted pattern on the surface 1a of the rubber substrate 1 by the processing method of the first mode after the peeled part 12 is formed on the surface 1a of the rubber substrate 1 by the processing method of the second mode.
Sequence of the processes is not limited to the above and the processing method of the second mode can be executed after the processing method of the first mode.

A laser process machine KL-7112A of MIYACHI CORPORATION is used as the laser irradiation device 2 and a laser irradiation port 2a of the device 2 has an open-close shutter for laser irradiation (not shown) capable of controlling open-close timing based on a predetermined program. Fig.1a, Fig.1b and Fig.1c conceptually show the laser irradiation device 2 as a part of such a laser process machine. In order to form a large number of small dimples 11··· on the surface 1a of the rubber substrate 1 by the processing method of the first mode or the third mode, while the laser irradiation device 2 scans along the surface 1a of the rubber substrate 1, laser beams set under fixed irradiation conditions are oscillated by a Q-switch mode, the open-close shutter is opened or closed at appropriate timing, and laser beams are irradiated on the surface 1a, thereby forming a large number of small dimples 11··· on the surface 1a of the rubber substrate 1 in a regularly dotted pattern. Fig.2 is an external plane view conceptually showing the rubber substrate 1 observed with a microscope when the rubber substrate 1 is obtained by the processing method of the first mode or the third mode. Fig.2 shows that laser beams set under fixed conditions are oscillated by the Q-switch mode while the laser irradiation device 2 scans at a fixed speed, the open-close shutter is opened or closed at fixed timing, and laser beams are irradiated on the surface 1a, thereby forming a large number of small dimples 11··· on the surface 1a of the rubber substrate 1 in a two-dimensional regularly dotted pattern.

Fig.3 shows in table an example of processing conditions of the processing method of each mode. A vulcanized sheet of NBR containing a bulking agent is used for the rubber substrate 1 in these modes. The rubber substrate 1 is not limited to NBR and may include HNBR, ACM, FKM, EPDM, AEM, VMQ, FVMQ, BR, CR and the like which are commonly used for a sealing member. YVO4 laser arranged to output laser beams of 1064nm in wavelength is used for the laser process machine having the laser irradiation device 2. Employable kinds of laser beams are YAG laser of 100 to 11,000nm wavelength, carbon oxide laser, argon laser, excimer laser, fiber laser, quartz laser, semiconductor laser, disk laser, F2 laser and the like in addition to YVO4 laser. Specifically YVO4 laser is highly versatile and is useful for executing the present invention. The laser irradiation device 2 has the open-close shutter (intermittent open-close) when small dimples 11··· are formed (the first mode and the third mode). The laser irradiation device 2 does not have the open-close shutter (always open) when the surface layer part is removed (the second mode and the third mode). Being intermittently open or close, the shutter opens for 0 to 0.6ms, preferably 0.01 to 0.1ms. Output of laser irradiation is set to be 20 to 24A and frequency is 0.1 to 200kHz. Scanning speed when the laser irradiation device 2 along the surface 1a of the rubber substrate 1 is controlled at 0.01 to 28,000mm/s.

When the laser irradiation device 2 is operated under such conditions, in the first mode and the third mode, the rubber substrate 1 has a large number of small dimples 11 arranged in a regularly dotted pattern as shown in Fig.2, the depth is 0.1 to 500 *µ* m, preferably 1 to 20 *µ* m, the opening diameter is 0.1 to 100 *µ* m, preferably 70 to 110 *µ* m, and the pitch P is 0.1 to 1000 *µ* m, preferably 10 to 300 *µ* m. In the second mode and the third mode, the surface layer part (skin layer) is removed from the rubber substrate 1 and the peeled part 12 is formed as shown in Fig.1b and Fig.1c.

Fig.4 is an explanatory table showing relation of a laser oscillation mode and a processing mode of the laser irradiation device for use in the processing method of the present invention. In the table, the laser oscillation mode desirably used in the processing method of the present invention is roughly divided into a continuous (CW) mode, a pulse mode, and a Q-switch mode. The table shows dimple formation by using a shutter in the first mode and without using the shutter in the first mode, and also shows the surface layer part is removed in the second mode. In the third mode, the first mode and the third mode are used together as mentioned above.

In case of using the shutter in Fig.4, regular small dimples are formed on a sample (rubber substrate) by intermittently opening the shutter while laser beams with broad wave shape as shown in the figure are irradiated at a fixed speed when laser beams are irradiated in the continuous (CW) mode. When laser beams are irradiated in the pulse mode, the shutter is intermittently opened while laser beams controlled by frequency are irradiated at a fixed speed, or the shutter is intermittently opened while laser beams controlled by time (mechanically set) are irradiated as mentioned above, thereby forming regular small dimples on the sample. In the latter case, small dimples are formed on the sample when laser pulse is timed to opening of the shutter. When laser beams are irradiated in the Q-switch mode, the shutter is intermittently opened while laser beams are irradiated at a fixed speed in such a manner that laser beams are set at short pulse by the Q-switch mode, thereby forming regular dimples on the sample.

In case that small dimples are formed without using the shutter, regular dimples cannot be formed by laser irradiation in the continuous mode. When laser beams in the pulse mode are irradiated, the laser beams with pulse pattern controlled by frequency or by time as shown in the figure are irradiated while scanning at a fixed speed, and regular small dimples are formed on the sample. In this case, small dimples are formed in response to each intermittent pulse. When laser beams are irradiated in the Q-switch mode, short pulse with larger pulse intervals is oscillated by the Q-switch mode as compared with the case when the shutter is used as mentioned above, laser beams are irradiated while scanning at a fixed speed, and regular small dimples are formed on the sample. Also in this case, small dimples are formed in response to each intermittent pulse.

In case of removing of the surface layer part, when laser beams are irradiated in the continuous (CW) mode, the surface layer part on which laser beams are irradiated is peeled by irradiating laser beams while scanning at a fixed speed. When laser beams are irradiated in the pulse mode, laser beams with pulse pattern which is controlled by frequency or by time as mentioned above are irradiated while scanning at a fixed speed, then the surface layer part on which laser beams are irradiated is removed. When laser beams are irradiated in the Q-switch mode, short pulse at short pulse intervals is oscillated by the Q-switch mode, laser beams are irradiated while scanning at a fixed speed, thereby peeling the surface layer part on which laser beams are irradiated.

In Fig.5 graphs show measurement results of how depth of the dimple 11 is changed by varying open time of the shutter, irradiation output of laser beams and frequency of laser beams when the small dimples 11··· are formed on the rubber substrate 1 made of NBR with the above-mentioned laser irradiation device 2. It is understood from the figure the longer the shutter opens, the larger laser irradiation output becomes, and the larger laser frequency is, the deeper the small dimple 11 becomes. Therefore, depth of the small dimple 11 can be appropriately controlled by properly controlling these factors.

In Fig.6 graphs show measurement results of how the opening diameter of the dimple 11 is changed by varying open time of the shutter, irradiation output of laser beams and frequency of laser beams when the small dimples 11··· are formed on the rubber substrate 1 made of NBR with the above-mentioned laser irradiation device 2. It is understood from the figure that the longer the shutter is opened and the larger laser irradiation output is, the larger opening diameter of the small dimple 11 becomes; however, opening diameter does not largely depend on frequency of laser beams. Therefore, opening diameter of the small dimple 11 can be controlled by appropriately adjusting these variable factors. Specifically, retention performance of grease is affected by depth rather than opening diameter of the small dimple 11, so that appropriate depth can be set by changing frequency of laser beams after setting an appropriate opening diameter by shutter open time and irradiation output of laser beam.

Fig.7a shows measurement results of friction coefficient caused between the rubber substrate and a metal ball when the above-mentioned rubber substrate sample obtained by the processing method of first mode of the present invention is applied with 0.005g grease and a metal (SUS304) ball of 10mm diameter is rotated (circumferential velocity at 261.66mm/sec) on the surface applied with grease along a circle of 10mm in diameter under a load of 50g. A friction-abrasion tester manufactured by RHESCA CO., LTD. (type FPR-2100) is used for measuring friction coefficient. The rubber substrate sample used herein is produced wherein pitch P of the small dimple 11 is set at 200 *µ* m by setting scanning speed of the above-mentioned laser irradiation device 2 and open-close timing of the open-close shutter, laser beams are irradiated at 50kHz frequency, and open-close time of the shutter and laser irradiation output are appropriately set in such a manner that depth of the small dimple 11 is 4 to 5 *µ* m and opening diameter of the small dimple 11 is 70 to 75 *µ* m. Fig.7b shows as a comparative example a measurement result of friction coefficient of a non-processed rubber substrate in a similar method.

Based on the results of Fig.7a and Fig.7b, it is understood that the rubber substrate sample in the processing method of the present invention reduces initial friction coefficient and is stable with time as compared with the non-processed rubber sample. This means the rubber substrate in the processing method of the present invention has good retention performance of grease when it slidably contacts a counterpart member such as metal with grease interposed therebetween, thereby achieving low friction and low abrasion at the time of sliding contact.

Fig.8a and Fig.8b show relation of frequency of laser irradiation at processing and hydrophilic property or lipophilic property of the surface of the above-mentioned rubber substrate sample obtained by the processing method of the second mode of the present invention. Fig.8a shows the result wherein water is delivered by drops on the sample surface from which the surface layer part is removed by continuous laser irradiation with each frequency and contact angle of the water drop on the rubber substrate surface is measured. The result shows when frequency of laser irradiation increases, hydrophilic property on the process surface deteriorates and water repellency increases. Fig.8b shows the result wherein hexadecane is delivered by drops on the sample surface from which the surface layer part is removed by continuous laser irradiation with each frequency and contact angle of the hexadecane drop on the rubber substrate surface is measured. The result shows when frequency of laser irradiation increases, lipophilic property on the process surface becomes superior, hexadecane fits the surface of the rubber substrate when frequency exceeds 20kHz, the droplet loses its shape and hexadecane spreads on the rubber substrate surface.

When the rubber substrate surface is treated with the processing method of the second mode, water repellency and lipophilic performance of the surface can be properly controlled by appropriately setting frequency of laser irradiation. Specifically, when the rubber substrate is used for a seal lip part such as a seal ring of a bearing, dirty water and the like are effectively prevented from entering the bearing from the outside when water repellency is increased. In addition, fitting performance of the rubber substrate with grease or the like which is used as a lubricant agent is improved when the lipophilic performance increases, thereby achieving outstanding lubrication effect.

When the rubber substrate obtained by the processing method of the third mode in which the first mode and the second mode are used is applied to the seal lip part of the above-mentioned seal ring and the like, effect in the first mode that retention performance of grease is improved and low friction and low abrasion at the time of sliding contact can be achieved and effect in the second mode that water repellency and lipophilic performance work together, thereby achieving a seal lip part having long life and excellent property as a sealing member.

Fig.9 shows an example when the rubber substrate treated with the method for processing a rubber surface of the present invention is applied to a seal lip part of a pack seal type seal ring. A seal ring 3 in the figure is a seal ring to be mounted to a bearing which rotatably supports vehicle wheels. The seal ring 3 comprises a metal slinger 4 externally fitted onto and integrated with an inner ring or a shaft (both of them are not shown in the figure) which rotates, a core member 5 which is internally fitted into and integrated with an outer ring (not shown) which is fixed, and a sealing member 9 made of rubber having three seal lip parts 6 to 8 which are fixed and integrated with the core member 5 and are formed so as to elastically and slidably contact the slinger 4. The sealing member 9 in the figure has as seal lips two side (axial) lip parts 6, 7 which elastically contact an axial surface of the slinger 4 and one grease (radial) lip 8 which elastically contacts a radial surface of the slinger 4. Grease G is applied on the elastic and sliding contact surface of the seal lip parts 6 to 8 and the slinger 4. Two dotted lines in the figure indicate original form of the seal lip parts 6 to 8 which are not elastically deformed.

The sliding contact surface 6a of the side lips 6, 7 with the slinger (a counterpart member) 4 is treated with the above-mentioned processing method. The enlarged view shows the sliding contact part of the side lip 6. The sliding contact surface 6a of the side lip 6 is treated with the processing method of the first mode. Namely, a large number of small dimples 61··· are formed on the sliding contact surface 6a in a regularly dotted pattern and grease G applied as mentioned above exists on the sliding contact surface 6a and the small dimples 61···. The slinger 4 and the sliding contact surface 6a of the side lip 6 relatively and slidably contact when the inner ring or the shaft rotates. The sliding contact surface 6a is provided with a large number of small dimples 61···, so that it has small contact area with the slinger 4, thereby reducing rotary torque of the slinger 4. Because of lubrication function of grease G on the mutual sliding contact part, increase of rotary torque is inhibited. Furthermore, because of grease retention performance by a large number of small dimples 61···, low friction and low abrasion as mentioned above, rotary torque can be kept low for a long time, abrasion powder of rubber caused at the time of sliding contact and foreign materials entered from the outside can be trapped in the small dimples 61···, thereby achieving a long life of the sealing member 9.

The sliding contact surface 6a has in the vicinity of a distal end of the seal lip 6 (free end on the outer circumferential side) is formed as a non-processed area 6b on which the above-mentioned method is not executed. The non-processed area 6b is a flat part with fixed width D in the radial direction and becomes a so-called seal point; and deterioration of seal performance by the above-mentioned process treatment can be compensated by the non-processed area 6b. The width D is designed to be larger than the minimum allowable width required for sealing and is smaller than the maximum allowable width required for reducing torque. A large number of small dimples 61··· are formed in a desirable regular pattern on the sliding contact surface 6a by the above-mentioned laser process, so that the non-processed area 6b can be secured and the fixed width D can be appropriately set taking into consideration of the above-mentioned advantageous effect of the small dimples 61···, thereby extending design freedom.

When the sliding contact surface 6a is treated with the processing method of the second mode in place of the first mode, the surface layer part, namely a skin layer, is removed as mentioned above, so that water repellency and lipophilic performance are increased. Therefore, ingress of dirty water into a bearing from the outside is highly prevented, the surface layer, namely a skin layer, is removed as mentioned above, so that water repellency and lipophilic performance are increased, fitting performance of grease to the sliding contact surface 6a is improved, and lubrication effect of grease becomes remarkable. Therefore, ingress of dirty water into a bearing from the outside is highly prevented, fitting performance of grease to the sliding contact surface 6a is improved, and lubrication effect of grease becomes remarkable. Furthermore, when the processing method of the third mode is executed, the effects of the processing method of the first mode and the processing method of the second mode are synergized and aptitude of the sealing member of the seal ring is dramatically improved.

Fig.9 shows an example in which a rubber substrate treated with the processing method of the present invention is the sealing member 9 including the seal lip parts 6 to 8 constituting the pack-seal type seal ring 3; however, the present invention is not limited to such an example and can be applied to sealing members with different structures and the similar effect can be obtained. Fig.9 exemplifies a pack-seal type seal ring applied to a bearing in which an inner ring rotates and an outer ring is fixed; however, the present invention can be applied to a pack-type seal ring in which an inner ring is fixed and an outer ring rotates.

### Reference Signs List

- 1: rubber substrate
- 1a: surface
- 11: small dimple
- 12: removed part
- 2: laser irradiation device
- 4: slinger (counterpart member)
- 6 to 8: seal lip part
- 6a: surface
- 6b: non-processed area
- 61: small dimple
- 9: sealing member

## Claims

1. A method for processing a rubber surface, **characterized by** forming on a rubber surface (1a) a large number of small dimples (11) in a regularly dotted pattern by irradiating laser beams from a laser irradiation device (2).

2. A method for processing a rubber surface, **characterized by** removing a skin layer of rubber by irradiating laser beams from a laser irradiation device (2).

3. A method for processing a rubber surface, **characterized by** forming on a rubber surface (1a) a large number of small dimples (11) in a regularly dotted pattern by irradiating laser beams from a laser irradiation device (2) and further **characterized by** removing a skin layer of said rubber surface by irradiating laser beams from said laser irradiation device (2).

4. The method for processing a rubber surface as set forth in claim 1 or 3, **characterized by** irradiating laser beams intermittently from said laser irradiation device (2) onto said rubber surface (1a) while said laser irradiation device (2) is scanning along said rubber surface (1a) at a fixed speed for forming a large number of small dimples (11) on said rubber surface (1a).

5. The method for processing a rubber surface as set forth in claim 4, wherein said laser irradiation device (2) has a shutter, and said intermittent irradiation of laser beams is executed with opening and closing of said shutter.

6. The method for processing a rubber surface as set forth in claim 2 or 3, **characterized by** irradiating laser beams continuously from said laser irradiation device (2) onto said rubber surface while said laser irradiation device (2) is scanning along said rubber surface (1a) at a fixed speed for removing said skin layer.

7. A sealing member comprising rubber including a seal lip part (6 - 8) elastically and slidably contacting a counterpart member, wherein a sliding contact surface of said seal lip part (6 - 8) contacting said counterpart member is treated with said method for processing a rubber surface as set forth in any one of claims 1 to 6.

8. The sealing member as set forth in claim 7, wherein said sliding contact surface has in the vicinity of a distal end of said seal lip part (6) an area where said method for processing a rubber surface is not executed.
